Europäisches Patentamt

European Patent Office

Office européen des brevets

(11) Publication number: **0 423 581 A2**

## (12) EUROPEAN PATENT APPLICATION

(21) Application number: 90119272.4

(51) Int. Cl.5: **G02B 6/38**

(22) Date of filing: **08.10.90**

(30) Priority: **17.10.89 IT 2204089**

(43) Date of publication of application:
**24.04.91 Bulletin 91/17**

(84) Designated Contracting States:
**DE ES FR GB**

(71) Applicant: **SOCIETA' CAVI PIRELLI S.p.A.**
**Piazzale Cadorna 5**
**I-20123 Milano(IT)**

(72) Inventor: **Bortolin, Bruno**
**Via Cantore, 23**
**Cinisello Balsamo (MI)(IT)**
Inventor: **Boero, Paolo**
**Via Parini 5/A**
**Milan(IT)**

(74) Representative: **Giannesi, Pier Giovanni et al**
**Pirelli S.p.A. Direzione Brevetti Piazzale**
**Cadorna, 5**
**I-20123 Milano(IT)**

(54) Separable compact connecting group for optic fibres forming a tape.

(57) The invention refers to a separable connecting group for optic fibres forming a tape, that comprises two connectors integral with the ends of respective tapes (1, 2) of optic fibres, each connector being provided with a face (16) for coupling with the other connector, the ends of the optic fibres (12) of the respective tape come out on said coupling face, each connectors comprises a pair of generally semi-cylindrical ferrules (4a, 4b), said ferrules being coupled by their respective facing axial plane and by the interposition of an end of the tape of the optic fibres, said ferrules are surrounded by a sleeve (5), being axially extended for a certain segment from said coupling face and force fitted on the same ferrules, the ferrules being also provided with grooves (15, 21) for one or more alignment pins (17), insertable in corresponding grooves of a facing connector, the ferrules being surrounded by an axially slidable annular ring nut (8), provided, at its end, with restraining means (18, 19) engageable with corresponding restraining means of the ring nut of the facing connector, resilient means (6) being interposed between the sleeve and the ring nut, said resilient means acting axially and causing a locking of the coupling faces of the connectors.

Fig. 5

## SEPARABLE COMPACT CONNECTING GROUP FOR OPTIC FIBRES FORMING A TAPE

The present invention refers to a connecting group for tapes of optic fibres.

In order to link together two optic cables of the tape kind, that is the kind where many optic fibres are parallelly arranged and locked together by a single coating made of plastic material, forming in this way a tape, and one or more tapes are then joined together to form the cable, it is necessary to arrange each optic fiber of a tape of one of the cables in alignment with the corresponding fiber of a tape of the other cable, in order to allow the light passage from a fiber to another, minimising the dispersion and the attenuation of the transmitted signal caused by disalignment defects of the same fibres.

To obtain this alignment, at the same time, for all the fibres forming the tape, the end of the same tape is suitably inserted in a rigid body, called connector, that maintains the fibres in a geometrically fixed position; a pair of connectors, integral with respective ends of tape fibres to be optically joined, is therefore arranged and kept in a faced and aligned position, so that the respective fibres can be correctly arranged in order to form the optical connection.

Connectors of the kind described are known, each of them comprises a pair of small plates having several grooves, in these grooves are housed the fibres, and other grooves suitable to house aligning means; the small plates are kept tightened together by means of resilient clips or adhesive and a pair of small plates, locked at the end of respective cables, are therefore contained in an outer envelope, comprising axial tightening means for the pair of small plates for carrying out the optical connection among the fibres.

Otherwise, the small plates integral with the end of a cable are inserted in an envelope, to form a connector linkable, by axial tightening means, with a similar connector of a second cable.

Connectors comprising monolithic elements in plastic material or similar are also known, these elements have holes in which the fibres of a tape can be housed, in turn said elements have to be also housed in outer envelopes and tightened by resilient clips or by similar means for the optical coupling.

The connector of the known embodiments is formed by a large number of components and the application of the connector to a fiber tape, that can be carried out also in the field, during the installation or the servicing of optic fiber tape, is therefore very complex, due to the brittleness of the fibres and the requested precisions for the optical coupling.

Connecting groups carried out according to the known embodiments, are also very cumbersome, both in the axial and in the cross direction and often they need the use of additional elements, which further increase the complexity and the encumbrance of the connection.

The object of the present invention is therefore to provide a connector for optic fiber tapes that can be carried out with the requested characteristics of precision and that can be applied to a tape with simple and quick operations, because it is formed by a small number of pieces, and that also shows a particularly limited encumbrance.

An object of the present invention is to provide a separable connecting group for optic fibres forming a tape, comprising two connectors integral with the ends of respective tapes of optic fibres, said tapes being at least formed by two parallel optic fibres contained in a single outer coating, each connector being provided with a face coupling with the other connector, the ends of the optic fibres of the respective tape come out on said coupling face, characterised by the fact that each connector comprises a pair of generally semi-cylindrical ferrules, said ferrules being coupled together by their respective faced axial planes and by the interposition of an end of the optic fiber tape, whose fibres are partially stripped of their common coating and come out at one end of the ferrules, said end forming the coupling face of the connector, said ferrules are surrounded by a sleeve that axially extends for a certain length generally from said coupling face and said sleeve is force fitted on the same ferrules, the ferrules being also provided with grooves, said grooves house one or more alignment pins, said pins are insertable in corresponding grooves of a faced connector, the ferrules being surrounded by an axially slidable annular ring nut, said ring nut being provided at its end facing the coupling face of re,straining means, said restraining means being engageable with corresponding restraining means of the ring nut of the faced connector, resilient means being interposed between the sleeve and the ring nut, said resilient means acting in the departing direction of the ring nut from said coupling face, said resilient means being in a deformed condition when the ring nuts of the two coupled connectors are engaged together, tightening in this way, the coupling faces of the connectors each against the other.

In more detail, each ferrule has several longitudinal grooves on its axial flat surface, said grooves are suited for partially housing the tape fibres, stripped of the common plastic coating, said fibres coming out on one of the end faces of the ferrule, forming the coupling face, that is suited for housing part of the optic fiber tape, adjacent the part of the optic fiber stripped of the common coating, generally for half of its thickness, two ferrules being coupled with their respective axial planes in contact and fitting the fibres in housings defined by respective grooves generally without clearance.

One or more alignment pin of a connector are force fitted between the respective grooves and the sleeve inserted on the ferrules.

The grooves for housing one or more alignment pins are arranged in a diametral plane, perpendicular to the axial flat surface of the ferrules.

The grooves for housing one or more alignment pins are arranged on the axial flat surface of the ferrules.

Preferably, each connector comprises two grooves for the alignment pins, more than a half of the length of a pin is inserted in only one of these grooves.

Adhesive is inserted in the recess housing the tape of the optic fibres and also in the groove housing the pin.

Ferrules are provided with one or more holes for the introduction of adhesive in the recess housing the fiber tape and in the groove housing the alignment pin.

The resilient means interposed between the sleeve and the ring nut is an helical spring surrounding the ferrules.

Restraining means for the ring nut are formed by a plurality of axially projecting teeth, having undercuts engageable with corresponding coupling parts of the ring nut of a faced connector.

Preferably, the ferrules are made by moulding with dimensionally stable plastic material, and the sleeve is made in metallic material.

The sleeve can be suitably inserted on the coupled ferrules with an end, that is backward for a little segment with respect to the coupling face of the ferrules, the length of said segment is larger than the thickness of the material taken away by lapping.

More details will be pointed out from the following description of an example of the embodiment taken in conjunction with the accompanying drawings, wherein:

- Fig. 1 is an outer view of a connecting group, in which the ring nuts for the mutual locking of the connectors are not engaged;
- Fig. 2 is an enlarged section taken along the plane II-II of Fig. 1;

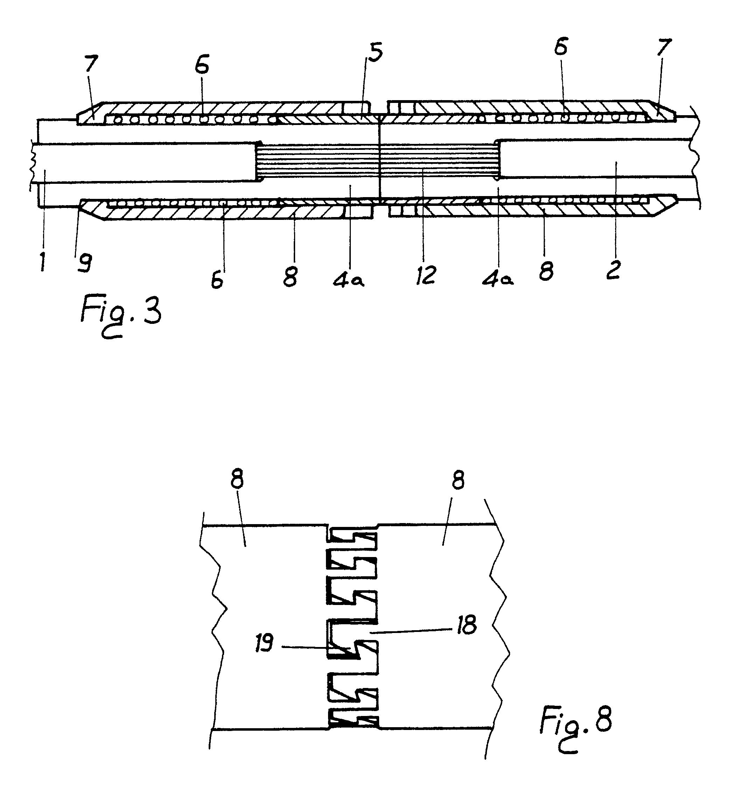

- Fig. 3 is a section taken along the plane III-III of Fig. 2;
- Fig. 4 is a view taken along the plane IV-IV of Fig. 1;
- Fig. 5 is a prospective section view take along the plane III-III of Fig. 2, without the fiber optic tape;
- Fig. 6 is a view showing the connecting group of Fig. 1, with the ring nuts engaged together;
- Fig. 7 is a view corresponding to the view of Fig. 4 of an alternative form of the embodiment of the connector;
- Fig. 8 is a view showing a feature of a device for joining the connectors.

As shown in figures from 1 to 5, a connecting group for two optic fibres 1,2 according to the present invention comprises, at the end of each tape, respective connectors 3a, 3b, formed by a pair of ferrules or elements 4a, 4b for housing the fibres, the optic fibres are tightened in position between said ferrules; a sleeve 5 is arranged around each pair of ferrules 4 said sleeve keeps the ferrules tightened together in their respective frontal zone.

A resilient element rests against a rear end 5a of the sleeve 5, said resilient element have the shape of an helical spring, that acts at the opposite end against the annular bottom 7 of a ring nut 8, that surrounds the ferrules and can axially slides on them; a shoulder 9 forms means for stopping the sliding of the ring nut 8 under the action of the spring 7.

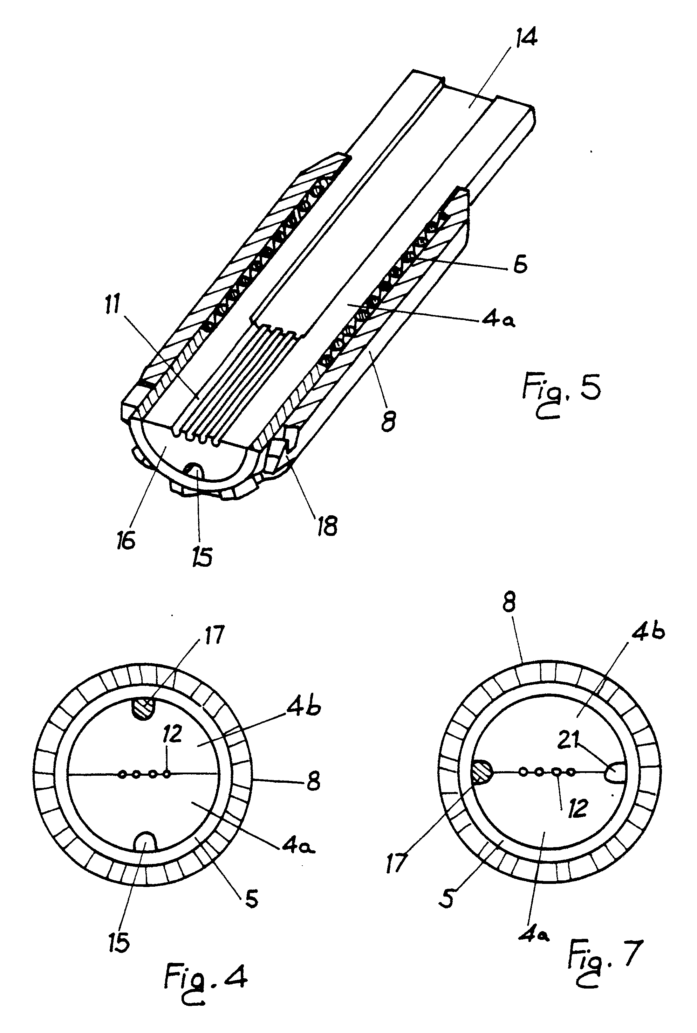

Each ferrule 4, as it can be better seen in fig. 5, is formed by a generally semi-cylindrical element, on the axial flat surface 10 of said element there are several grooves 11, suitable for housing, with great precision, fiber ends 12 of a tape of optic fibres, said ends 12 being partially stripped of their common outer coating 13 made of plastic material.

A remaining part of the plastic coating 13 is housed in a recess 14 arranged in a rear zone of the ferrule. 1

The ferrules 4a, 4b are also provided, in a plane perpendicular to the surface 10, with grooves 15 extending for a part of the length of a ferrule starting from a front surface 16; respective pins 17 are housed in the grooves 15, said pins are tightened against the bottom of the respective grooves of the sleeve 5.

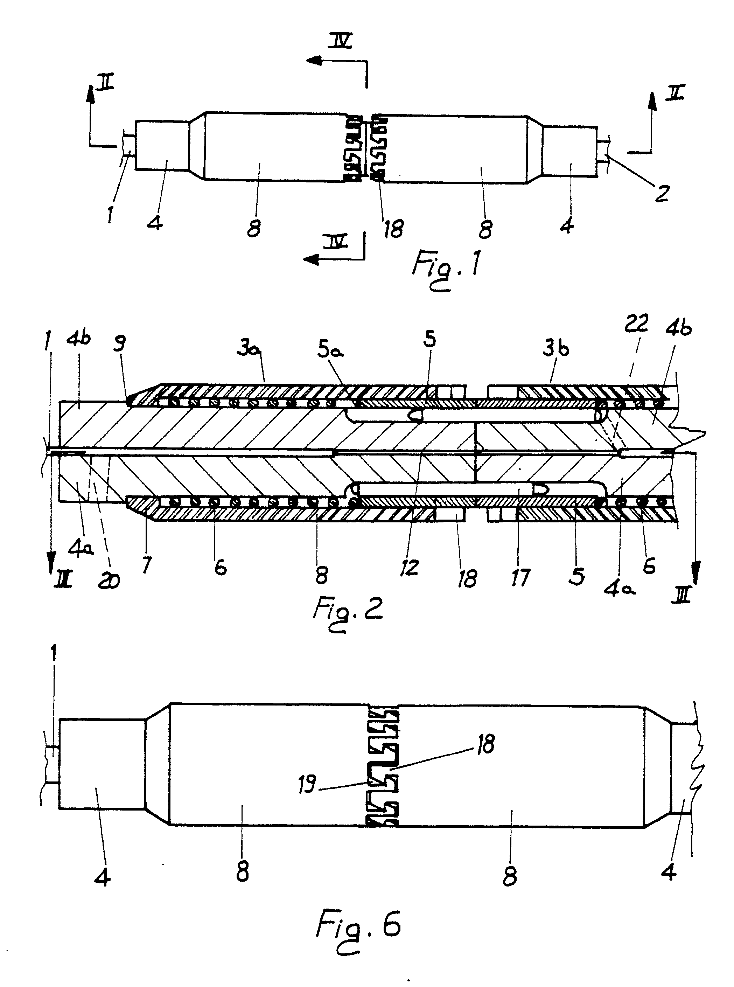

As it is shown in fig. 2, preferably each pair of ferrules, forming a connector, has a pin housed in the bottom of the groove, while the second groove is without a pin, in order to allow the insertion in said groove of the corresponding pin housed in the second connector.

The ring nut 8 has one end facing the front face 16 of the corresponding connector, shaped with a profile provided of restraining teeth 18, said teeth are suited for engaging with corresponding restraining teeth of the ring nut of the connector arranged in front of said ring nut 8; the enlarged configuration of the teeth 18, shown in fig. 8, considers the presence of undercut 19 and said configuration allows the engagement of opposite ring nuts after an axial insertion and a rotation for coupling the teeth 19 among them, said teeth are kept in a tightened condition thanks to the action of the springs 6, insuring in this way the foreseen contact pressure between the surfaces 16 of the connectors facing each other.

The configuration exhibited by the restraining teeth 18 is to be considered by way of example, in fact many other alternative configurations are possible, such as a joint for rotation, or a bayonet joint or by means of an elastic deformation.

The structure according to the invention allows particularly simple assembling operation of the connector to the end of the optic cable: for this reason the end of the optic fiber tape is stripped of its corresponding coating made of plastic material for a certain segment, leaving uncovered the fibres; the same fibres are therefore housed inside the grooves 11 of a ferrule 4a, while a part of the tape is housed in a recess 14 of the same ferrule.

The grooves 11 and the recess 14 are dimensioned in order to house the optic fibres and the tape for half of their thickness respectively; a second ferrule 4b is therefore arranged on the ferrule 4a, surrounding the fibres and the end of the tape.

Adhesive introduced in the recess 14 before joining the two ferrules 4a, 4b or fed through a hole 20 of similar holes in the same recess (fig. 2) allows to keep integrally locked the fiber tape in its housing without exerting unacceptable mechanical stresses to the same fibres.

After having joined the two ferrules, which form a body that is generally cylindrical, a ring nut 8 is inserted, said ring nut 8 is able to slide until it rests against the shoulder 9; afterwards the spring 6 is arranged to rest against the annular bottom 7 of the ring nut and then the sleeve 5 is force fitted on the front part of the joined ferrules, keeping said ferrules strictly locked together.

The front surface 16 of the ferrules and the surface of the collar that surrounds the ferrules is therefore lapped, to insure the perfect flatness and smoothness for the optic coupling.

In order to make easier the lapping operation of the front surface 16 of the ferrules, the sleeve 5 can be suitable inserted on the same ferrules with an end that is a little backward with respect to the surface 16, so that the sleeve is not subjected to the lapping operations. 1

A pin 17 is then force fitted in a corresponding groove 15 between the same groove and the sleeve 5.

The pin 17 is suitable inserted in the groove 15 for more than a half of its length, while its projecting portion is inserted, when the two connectors are coupled, in the empty groove of the other connector: in this way it is obtained a friction constraint which is considerably stronger where the inserted segment of the pin is longer, therefore when the two connectors are separated, each pin stays integral with the connector in which the pin is more inserted, leaving the same connectors with an alignment pin and an empty groove, ready without further operations for a new connection with other similar connectors.

In order to increase the constraint of the pin in its housing, it sis possible to insert adhesive in the same housing, carrying out for example a through hole passage 22, or similar holes, (fig. 2) between the recess 14 and the groove 15.

Two connectors, carried out and assembled in the above mentioned way, can be coupled together by introducing the corresponding pins in the corresponding grooves of the faced connector, keeping in contact the lapped coupling faces 15 and keeping tightened together the connectors after having carried out the mutual engagement of the ring nuts 8 axially pushed one against the other: in this conditions the springs 6 insure a constant pressure between the faces 16, suitable to guarantee the correct optical coupling.

The ferrules 4 are preferably made by moulding mith dimensionally stable plastic material, such as mineral powders filled resins, insuring the requested precision and the likeness among the pieces; the configuration of the ferrules is particularly suited to carry out a mould for this object, because said ferrules are formed by elements devoid of through holes for housing the fibres, on the opposite the fibres have their housing in outwardly opened grooves, whose impression, for the manufacture by mould, can be obtained with the requested precision.

The sleeve 5 is preferably carried out in metallic material, for example steel, brass or similar material, in this way it can exert a tightening action on the ferrules and on the pin 17, avoiding that the force fitting on the pins could stress the adhesive that block the tape 1 or 2 in the housing, causing the detachment of the ferrules, after repeated connections and separations of the connectors.

The configuration of the ferrules 4, where the grooves for the pins are arranged in a plane perpendicular to the separation plane between the same ferrules, where the housings for the fibres are carried out, allows to place a large number of fibres with a particularly reduced outer encumbrance, fitting for example in the same connector a tape with 10 fibres; when it is not necessary to house a large number of fibres, it is also possible to carry out the ferrules, according to an alternative embodiment shown in fig. 7, in which the housings 21 for the pins are carried out in the same plane of separation between the ferrules: this configuration limits, under the same outer encumbrance, the width of the fiber tape that can be housed, that is the fiber number arranged on a single connector but it compels to maintain the requested coupling precision of about 1 μm, only for the surface having the grooves for the fibres and the pins, meanwhile the precision requested for the remaining outer surface is inferior, because it has just the function to support the sleeve 5 which tightens the ferrules, therefore this surface is easier to carry out.

The connector structure according to the invention is therefore particularly convenient, both for its compact size, that allows to house a high number of connectors in a reduced volume, and for the simple assembly that it shows, requesting the assembling, in a sequence, of a reduced number of pieces for the application of a connector to the end of an optic fiber tape; moreover the described structure allows to avoid, during the connection of the two connectors, to arrange outer resilient elements to lock the connectors together because it is sufficient to engage the nut rings.

Many modifications can be introduced, without departing from the scope of the present invention in its general characteristics.

## Claims

1. Separable connecting group for optic fibres forming a tape, comprising two connectors (8) integral at the end of corresponding optic fiber tapes (1, 2) formed at least by two parallel optic fibres contained in a single outer coating, each connector being provided with a face (16) coupling with the other connector, on said coupling face coming out the ends of optic fibres (12) of the respective tape, characterised by the fact that each connector comprises a pair of generally semicylindrical ferrules (4a, 4b), said ferrules being coupled by their respective faced axial planes and by the interposition of an end of the optic fiber tape, whose fibres (12) are stripped of their common coating for a certain segment and come out at an end of the ferrules, forming the coupling face of the connectors, said ferrules are surrounded by a sleeve (5) that axially extends for a certain length generally from said coupling face (16) and it is force fitted on the same ferrules, the ferrules being also provided with grooves (15, 21), said grooves housing one or more alignment pins (17), which are insertable in corresponding grooves of a faced connector, the ferrules being surrounded by an axially slidable annular ring nut (8), said ring nut being provided at its end facing the coupling face (16) with restraining means (18, 19), said restraining means being engageable with corresponding means (18, 19) of the ring nut of the faced connector, resilient means (6) being interposed between the sleeve (5) and the ring nut (8), said resilient means acting in the departing direction of the ring nut from said coupling face, said resilient means being taken in a deformed condition when the ring nuts of the two coupled connectors are engaged together, tightening in this way the coupling faces of the connectors each against the other.

2. Separable connecting group for optic fibres forming a tape according to claim 1, characterised by the fact that each ferrule (4a, 4b) has on its axial flat surface several longitudinal grooves (11), suitable to partially house the fibres (12) of the tape, stripped of their common plastic coating, said fibres coming out on one of the end faces (16) of the ferrule, forming the coupling face, and a recess (14) coming out on the opposite face of the ferrule, suitable to house a segment of the optic fiber tape (1, 2), adjacent the portion of the fibres stripped of their common coating, generally for half of its thickness, two ferrules being coupled with their corresponding axial planes in contact, said ferrules fitting the fibres in defined housings of their corresponding grooves generally without clearance.

3. Separable connecting group for optic fibres forming a tape according to claim 1, characterised by the fact that one or more of said alignment pins (17) of a connector are force fitted between the corresponding grooves (15, 21) and the sleeve (5) inserted on the ferrules (4a, 4b).

4. Separable connecting group for optic fibres forming a tape according to claim 1, characterised by the fact that the grooves (15) for housing one or more alignment pins (17) are arranged in a diametral plane, perpendicular to the axial flat surface of the ferrules.

5. Separable connecting group for optic fibres forming a tape according to claim 1, characterised by the fact that the grooves (21) for housing one or more alignment pins (17) are arranged in the axial flat surface of the ferrules.

6. Separable connecting group for optic fibres forming a tape according to claim 3, characterised by the fact that each connector comprises two grooves (15, 21) for alignment pins (17), a pin (17) being inserted in one of said grooves for more than a half of its length.

7. Separable connecting group for optic fibres forming a tape according to claim 2, characterised by the fact that adhesive is inserted in the recess (14) housing the tape (1, 2) of optic fibres.

8. Separable connecting group for optic fibres forming a tape according to claim 6, characterised by the fact that adhesive is introduced in the groove (15, 21) housing the pin (17).

9. Separable connecting group for optic fibres forming a tape according to claims 7, 8, characterised by the fact that the ferrules (4a, 4b) are provided with one or more holes (20, 22) for the introduction of adhesive in the recess (14) housing the fiber tape (1, 2) and in the groove (15, 21) housing the alignment pin (17).

10. Separable connecting group for optic fibres forming a tape according to claim 1, characterised by the fact that the resilient means (6) interposed between the sleeve (5) and the ring nut (8) is an helical spring surrounding the ferrules (4a, 4b).

11. Separable connecting group for optic fibres forming a tape according to claim 1, characterised by the fact that the restraining means of the ring nut (8) are formed by a plurality of axially projecting teeth (18), having undercut portions engageable with corresponding coupled portions (19) of the ring nut (8) of a faced connector.

12. Separable connecting group for optic fibres forming a tape according to claim 1, characterised by the fact that the ferrules (4a, 4b) are made in dimensionally stable plastic material obtained by moulding.

13. Separable connecting group for optic fibres forming a tape according to claim 1, characterised by the fact that the sleeve (5) is carried out in metallic material.

14. Separable connecting group for optic fibres forming a tape according to claim 1, characterised by the fact that the sleeve (5) is inserted on the coupled ferrules (4a, 4b) with its end being backward for a short segment with respect to the coupling face of the ferrules, said segment being larger than the thickness of the material taken away by lapping.

Fig. 1

Fig. 2

Fig. 6

7

Fig. 3

Fig. 8

14

11

5

4a

8

Fig. 5

16

15

18

17

4b

12

8

4a

5

15

Fig. 4

8

4b

21

12

17

5

4a

Fig. 7